# FASCICULE DE BREVET EUROPEEN

(11) **EP 1 434 956 B1**
(45) Date de publication et mention de la délivrance du brevet: **22.03.2006**
(21) Numéro de dépôt: 02783232.8
(22) Date de dépôt: 07.10.2002
(51) Int. Cl.: F16H 57/12

(54) **DISPOSITIF D'ASSERVISSEMENT D'UNE CHARGE A PRECONTRAINTE VARIABLE**
EINRICHTUNG ZUM VERSPANNEN EINES DOPPELANTRIEBES MIT VARIABLER VORSPANNUNG
SERVO-CONTROL UNIT FOR A VARIABLE PRESTRESSED LOAD

(30) Priorité: 10.10.2001 FR 0113016
(43) Date de publication de la demande: 07.07.2004
(73) Titulaire: GIAT Industries, 78000 Versailles (FR)
(72) Inventeur: URVOY, Emile, -91470 Limours (FR)
(74) Mandataire: Célanie, Christian
(86) Numéro de dépôt international: PCT/FR2002/003410
(87) Numéro de publication internationale: WO 2003/031844

(56) Documents cités:
- EP-A- 0 300 905
- FR-A- 2 277 280
- FR-A- 2 538 136
- GB-A- 1 135 512
- US-A- 3 238 803

## Description

Le secteur technique de la présente invention est celui des dispositifs d'entraînement d'une charge à jeu réduit ou nul entre le moteur et la charge.

Lorsqu'une charge est entraînée en mouvement, et notamment en rotation, il est nécessaire de réduire au minimum les jeux entre ladite charge et le moteur d'entraînement pour obtenir un positionnement précis de la charge par rapport à une référence donnée. Ce problème trouve une acuité importante dans le domaine du pointage des tourelles supportant une arme dans les véhicules blindés.

Divers principes de rattrapage de jeux sont connus et utilisés dans les diverses branches de la technique.

A titre d'illustration, on citera le brevet FR-2221981 qui propose deux chaînes indépendantes et légèrement antagoniste pour supprimer les problèmes de jeu, mais en utilisant deux moteurs. C'est le principal inconvénient de ce dispositif.

Dans le brevet FR-2538136 on a proposé d'affranchir la chaîne d'asservissement de l'élasticité de la transmission de façon que la motorisation soit comparable au cas d'un moteur-couple attelé directement à la charge. Dans le système proposé, la motorisation est constituée par un moteur relié à la charge par deux réducteurs dont l'élasticité est utilisée pour faire disparaître le jeu dans la transmission par une précontrainte réduite. Cette précontrainte réduite est suffisante pour absorber les différentes erreurs de type homocinétique qui peuvent apparaître entre le moteur et la charge. Ce système convient parfaitement lorsque le ratio entre l'élasticité des réducteurs et l'erreur maximale d'homocinétisme est élevée.

Les brevets US 3 238 803 FR 2 277 280 décrivent des dispositifs de transmission à division de puissance et précontrainte réglable. Cependant, ces documents ne proposent pas de précontrainte variable mais des précontraintes soit fixes, soit réglables selon des valeurs discrètes.

Le brevet EP 0 300 905 décrit un dispositif de rattrapage de jeu entre deux chaînes par le moyen de deux pignons à dentures inclinées opposées. Le rattrapage de jeu et de la précontrainte sont réalisés en déplaçant en translation l'axe supportant les deux pignons. Un inconvénient majeur de ce dispositif réside dans le fait qu'il met en oeuvre quatre pignons en tout, ce qui est particulièrement compliqué à mettre en oeuvre. Un autre inconvénient réside dans le fait qu'il n'est pas prévu d'introduire un niveau de précontrainte variable, mais d'appliquer une contrainte ajustable par un opérateur.

Le brevet GB 1 135 512 décrit un mécanisme de motorisation d'un chariot de machine-outil comportant un dispositif d'asservissement d'une charge à l'aide d'un moyen de motorisation relié à la charge par deux réducteurs et comprenant un système de motorisation de précontrainte disposé entre les deux réducteurs de manière à appliquer un couple positif et négatif respectivement à chacun des réducteurs. Cependant, un inconvénient majeur de ce dispositif réside dans le fait que la précontrainte est directement proportionnelle à l'effort appliqué par le moteur et ne prend pas en compte les anomalies naturelles du système de transmission.* Ce document étant le plus proche de l'invention sert de base au préambule de la revendication principale.

Toutefois, lorsque les erreurs d'harmonisation dépassent environ 10% du débattement entre le moteur et la charge nécessaire pour transmettre le couple maximum de la motorisation, on utilise un principe de précontrainte approximativement fixe en effort pour éviter l'arc-boutement de deux chaînes mises en parallèle, localement ou globalement sur l'ensemble de la cinématique. L'invention vise à fournir un dispositif offrant cette possibilité.

L'invention a donc pour objet un dispositif d'asservissement d'une charge entraînée en rotation à l'aide d'un moyen de motorisation relié à la charge par deux réducteurs et comprenant un système de motorisation de précontrainte disposé entre les deux réducteurs de manière à appliquer un couple positif et négatif respectivement à chacun des réducteurs, caractérisé en ce qu'il comporte des capteurs pour la mesure des mouvements des réducteurs et en ce que le système de motorisation de précontrainte est piloté par un moyen spécifique qui permet de définir les commandes réalisées par ledit système de motorisation de précontrainte pour appliquer des couples variables aux réducteurs, de manière à introduire un niveau de précontrainte variable en fonction des anomalies naturelles du système de transmission qui à couple transmis nul dans chacun des réducteurs, correspond à la position relative entre ledit moyen de motorisation et ladite charge.

Avantageusement, le système de précontrainte est apte à appliquer d'une part un couple en un point quelconque du domaine de fonctionnement des réducteurs et d'autre part d'y introduire un niveau de précontrainte variable.

Selon une première réalisation, le système de précontrainte est un vérin commandé par un moteur et coopérant avec une crémaillère ou un système vis-écrou.

Avantageusement, le système de précontrainte comprend une boîte à étages de puissance à trains épicycloïdaux.

Selon une autre réalisation, le dispositif comprend des entrées de précontrainte sur les couronnes des réducteurs avec motorisation de précontrainte par vérin hydraulique et asservissement de pression.

Selon encore une autre réalisation, le système de précontrainte est un ensemble à double chaîne de réduction intégrant un vérin et à au moins un pignon d'entrée dont l'axe de rotation à un degré de liberté par rapport audit ensemble.

Avantageusement, le pignon est relié à la sortie dudit ensemble par un système du type joint de Oldham.

Avantageusement encore, le dispositif comprend une bielle articulée pour assurer un déplacement radial du pignon.

Selon encore une autre réalisation, l'un des réducteurs présente un étage à engrenages à dentures inclinées.

Avantageusement, le pignon de l'étage présente un degré de liberté axial par rapport à la roue, ledit degré de liberté étant utilisé pour modifier la précontrainte des deux chaînes par un moto-réducteur.

Selon encore une autre réalisation, le moyen de précontrainte comprend un vérin permettant d'appliquer les réducteurs sur la charge.

Avantageusement, le système de motorisation de précontrainte comporte un moyen de commande électrique.

On peut appliquer en outre le principe de la double motorisation, dont chacune des chaînes est respectivement utilisée pour fournir l'une des couples positifs l'autre des couples négatifs à transmettre à la charge. Dans ce cas, la précontrainte est réalisée de façon active par commande particulière des motorisations de chacune des chaînes, ce qui permet de garantir la transmission de couples positifs ou négatifs à la charge sans avoir à traverser le jeu des chaînes de transmission.

L'invention s'applique particulièrement aux systèmes présentant un jeu important entre le moteur et la charge, jeu non négligeable relativement à la déformation angulaire de la transmission sous l'effort maximal à transmettre. La seconde particularité est que le système est particulièrement sensible aux couples de friction dans la transmission sous l'aspect de la précision finale mais également sous l'aspect énergétique.

D'autres caractéristiques, détails et avantages de l'invention ressortiront plus clairement de la description donnée ci-après à titre indicatif en relation avec des dessins dans lesquels :
- la figure 1 est une représentation schématique générale du dispositif selon l'invention,
- la figure 2 est un synoptique général du dispositif selon l'invention,
- la figure 3 est une vue d'un premier exemple de réalisation de l'invention,
- la figure 4 illustre un train épicycloïdal,
- la figure 5 est une vue d'un second exemple de réalisation de l'invention,
- la figure 6 est une vue d'un troisième exemple de réalisation de l'invention, et
- la figure 7 est une coupe d'un quatrième exemple de réalisation de l'invention.

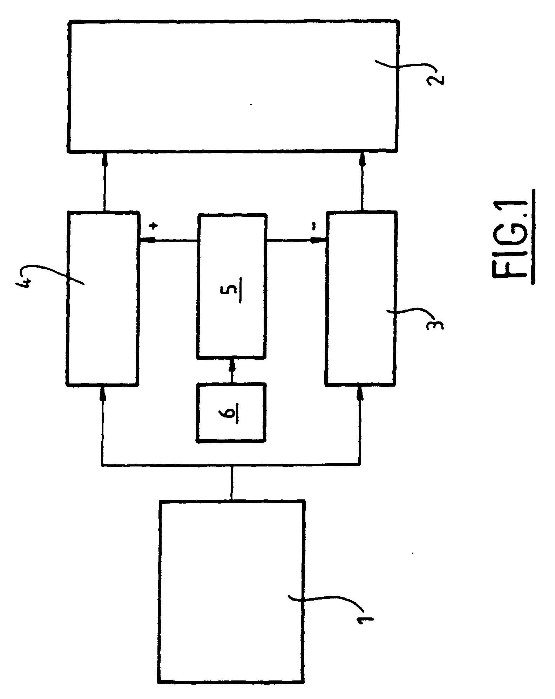

Sur la figure 1, on voit que le dispositif selon l'invention comprend schématiquement un moteur 1 dimensionné pour les besoins de fourniture de couple et de vitesse à une charge 2. Entre le moteur 1 et la charge 2 est disposée une double chaîne de réduction comprenant les réducteurs 3 et 4 pour relier la charge au moteur. On dispose un moyen de motorisation de précontrainte 5 entre les réducteurs 3 et 4, chacun muni d'une entrée en position utilisée par le moyen de motorisation de précontrainte. Bien entendu, cette commande permet d'introduire un niveau désiré de précontrainte. Enfin, un moyen spécifique 6 permet de définir les commandes réalisées par le moyen 5.

La structure ainsi décrite permet d'adapter les chaînes de réduction aux différentes anomalies naturelles du système de transmission, qui à couple transmis nul dans chacune des chaînes, correspond à la position relative entre le moteur 1 et la charge 2 dans lesquels on peut inclure :
- l'influence de la variation de la température sur les dilatations différentielles entre le carter des réducteurs et les éléments mécaniques internes,
- les erreurs d'ovalisation au niveau d'un secteur denté ou d'une circulaire,
- les erreurs d'homocinétisme entre le moteur et la charge, dues aux erreurs de taillage des engrenages.

Selon le principe du réducteur mécanique utilisé, le système d'addition de la précontrainte pourra prendre diverses formes. On les classera en deux familles correspondant respectivement :
- à l'ensemble des systèmes électromécaniques permettant d'ajouter un déplacement angulaire supplémentaire dans chacune des chaînes. On exploite en particulier le fait que le débattement à ajouter est relativement faible. On peut par exemple obtenir ce déplacement limité par un déplacement relatif radial entre les pignons de sortie et le secteur ou la circulaire à entraîner. On peut également utiliser le degré de liberté potentiel d'un étage de réduction par train épicycloïdal pour introduire la variable désirée. Une autre variante réside dans l'utilisation du déplacement axial d'un pignon de réduction à engrenages inclinés pour récupérer le degré de liberté désiré,
- à utiliser un système de type vérin hydraulique avec asservissement de pression qui constitue un moyen bien adapté pour assurer le contact des deux chaînes sans jeu et arc-boutement contrôlé.

L'intérêt nominal du système de motorisation à précontrainte variable est qu'il constitue un dispositif qui permet, d'une part de compenser les variations homocinétiques différentielles entre les deux chaînes de réduction, et, d'autre part d'augmenter la précontrainte au niveau du couple à transmettre dans la transmission. Cette optimisation du couple de précontrainte permettra en effet de minimiser le couple de friction dans la chaîne de motorisation avec son effet, d'une part sur la précision de l'asservissement de la charge et, d'autre sur le coût énergétique de la commande de motorisation. En effet, les systèmes de précontrainte fixe qui permettent de garantir une caractéristique de raideur de la chaîne de motorisation approximativement constante dans tout le domaine des couples à transmettre et dans le domaine des positions de la charge ont pour effet direct d'augmenter le niveau de couple de friction à vaincre avec le double inconvénient sur la précision de l'asservissement de la charge et sur le coût énergétique de la commande.

Le moyen proposé pour faire varier, de façon accessible à la commande, la précontrainte dans la chaîne de motorisation doit donc être associé à une commande adaptée. On distinguera dans cette commande, d'une part le principe permettant d'associer au couple instantané à mettre en place dans la chaîne principale celui qu'il est nécessaire d'appliquer dans la chaîne de précontrainte et, d'autre part la loi de commande permettant de réaliser cette précontrainte sur la chaîne secondaire.

Le traitement à réaliser sur le signal à prélever sur la chaîne principale est un traitement classique permettant de déterminer un niveau de couple de précontrainte correspondant à la valeur absolue du couple maximum. Les lois de type filtrage double alternance peuvent utilement être appliquées. Quant à la commande de mise en couple de la chaîne de précontrainte, tout moyen permettant soit de mesurer le couple de précontrainte mis en place dans système de transmission soit d'identifier le besoin en positon angulaire du moteur de précontrainte correspondant respectivement aux erreurs d'homocinétisme à compenser et à l'angle supplémentaire correspondant au couple de précontrainte à mettre en place.

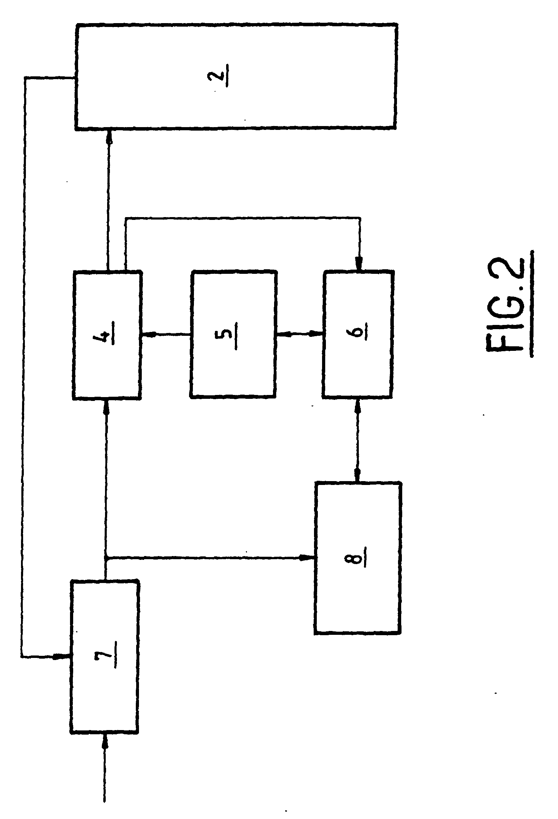

Sur la figure 2, on a représenté le synoptique général présentant d'une part, la chaîne de motorisation principale 4 organisée pour permettre d'introduire une entrée de réglage de la précontrainte dans la chaîne de réduction la commande de la chaîne principale 7 et d'autre part, la loi de génération 8 du couple de précontrainte variable, à partir de l'estimation du couple instantané à mettre en place dans la chaîne principale 7 et la loi de commande 6 de mise en place de la précontrainte.

Le concept de moto-réducteur à précontrainte variable n'est pas spécifique d'un principe particulier de réducteur. Il est toutefois nécessaire d'introduire des modifications locales permettant d'obtenir au minimum une entrée de précontrainte dans la double chaîne de réducteur. A titre d'exemple, on citera les moyens suivants de réalisation d'une précontrainte variable :
- boîtes à étages de puissance à trains épicycloïdaux et entrées de précontrainte sur les couronnes avec motorisation de précontrainte par vérin hydraulique et asservissement de pression, ou micro-vérin électrique commandé en position.
- boîte à double chaîne de réduction et à au moins un engrenage de sortie dont l'axe de rotation a un degré de liberté relativement à la boite (radial ou circulaire). Le pignon est relié à la sortie de boîte par un système du type joint de Oldham par exemple et la position relative de son axe relativement à la circulaire est réglé par une motorisation asservie en position.
- réducteur à double chaîne dont un des étages est réalisé par des engrenages à dentures inclinées. Les pignons associés ont un degré de liberté axial relativement au carter de la boîte, ce degré de liberté étant utilisé pour modifier la précontrainte des deux chaînes par un système de type moto-réducteur.
- boîte de pointage oscillante et mini-vérin de réglage boîte circulaire.
- galets excentriques sur une crémaillère.

Ces réalisations sont exemplifiées de la manière suivante.

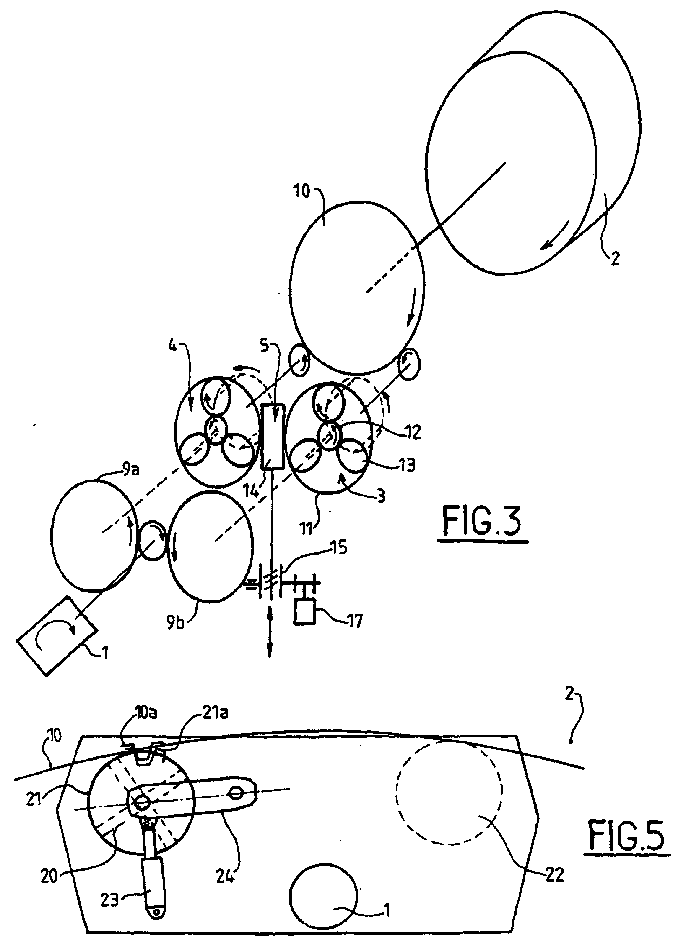

Sur la figure 3, on a représenté en perspective un exemple de réalisation du système de précontrainte 5 intégré dans les réducteurs 3 et 4 à train épicycloïdal. On trouve dans l'ordre entre le moteur 1 et la charge 2, le pignon d'entrée 9a ou 9b, le train épicycloïdal 3 ou 4 et la roue de sortie 10. Le train épicycloïdal 3 ou 4 comprend classiquement une couronne 11 fixe à denture interne, un pignon d'entrée 12 et trois engrenages planétaires 13 engrenant sur la denture interne de la couronne. Selon l'invention, on introduit une précontrainte en rendant mobile dans les deux sens la couronne 11 selon une faible rotation. Par faible rotation, on entend une rotation de l'ordre de 5°. Cette rotation est obtenue à l'aide d'une double crémaillère 14 entraînée en translation par un vérin électrique de précontrainte 15-17. Ce vérin est de type connu et il n'est pas nécessaire de le décrire en détail.

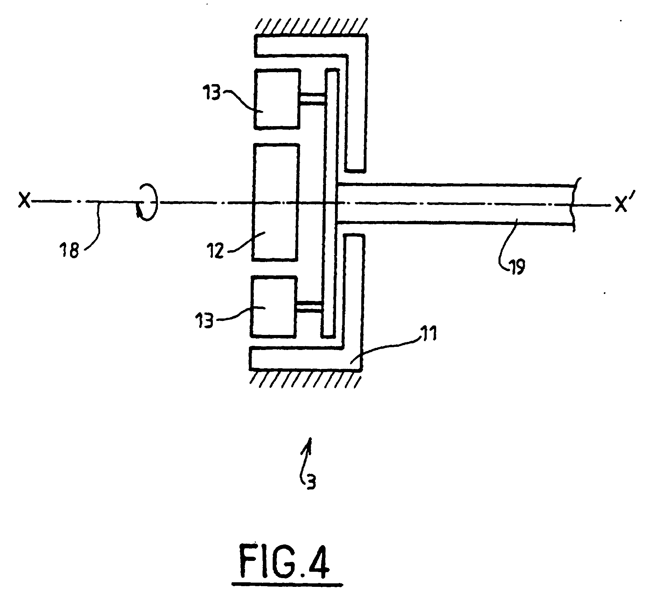

Sur la figure 4, on a représenté la structure classique du train épicycloïdal où on retrouve le pignon d'entrée 12 solidaire de l'arbre moteur 18 (relié au moteur 1) aligné sur l'axe d'entraînement XX', les satellites 13 solidaires de l'arbre de sortie 19, lui aussi aligné sur l'axe XX'. Classiquement, les satellites 13 engrènent sur la denture intérieure de la couronne 11. Cette couronne 11 est classiquement fixe par rapport à son support et elle est rendue mobile dans l'invention afin d'introduire la précontrainte variable comme expliqué précédemment.

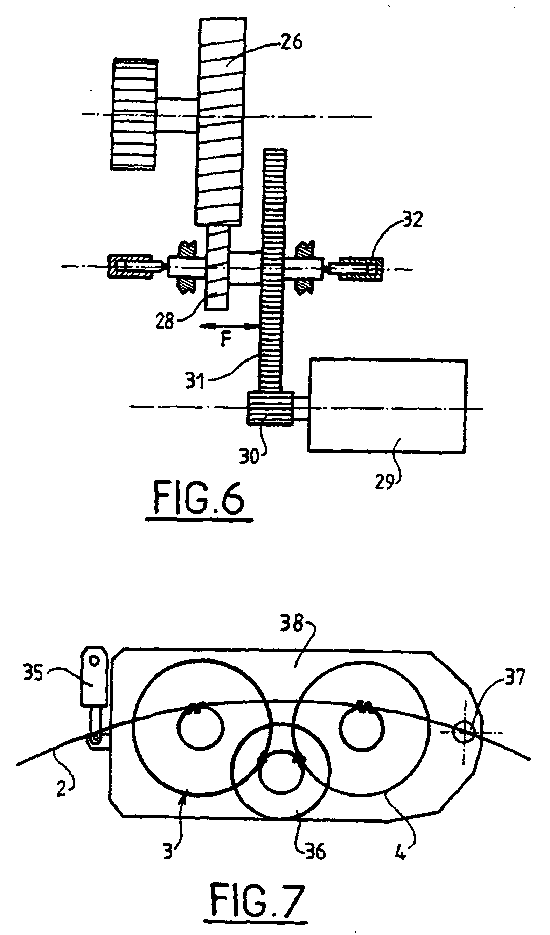

Sur la figure 5, on a représenté un autre exemple de réalisation du moyen de précontrainte variable. Il correspond à un moto-réducteur à double chaîne de réduction entre un moteur 1 et la charge 2. Chacun des deux réducteurs engrène sur la roue intérieure 10 respectivement via les pignons 21 et 22. Le pignon 21, relié angulairement à l'axe de sortie de boîte par une liaison de type à joint d'Oldham 20. Une bielle articulée 24 autorise un déplacement radial du pignon 21 relativement à la circulaire 10. Le déplacement radial du pignon 21 occasionne un déplacement angulaire relatif du pignon 21 relativement au pignon 22 modifiant ainsi la précontrainte. Le vérin 23 permet de régler cette précontrainte.

Sur la figure 6, on a représenté une coupe d'un autre exemple de réalisation d'un moyen de précontrainte selon lequel l'étage de réduction est constitué de pignon à denture inclinée. Ainsi, la roue 26 engrène avec le pignon 28 via ses dentures inclinées. Le pignon 28 est entraîné par le moteur 29 par les pignons 30 et 31. Pour régler la précontrainte on provoque une translation du pignon 28 à l'aide du vérin 32 de positionnement. Le déplacement du pignon 28 suivant la flèche F permet de l'engager plus ou moins dans la denture de la roue 26 et provoquer ainsi une variation de la précontrainte. Sur la figure, on n'a pas représenté la seconde chaîne de réduction qui est tout à fait classique.

Sur la figure 7, on a représenté une vue d'un autre exemple de réalisation d'un moyen de précontrainte. Il comprend un vérin 35 de précontrainte permettant d'appliquer les réducteurs 3 et 4 de manière réglable contre la denture de la charge 2. Sur la figure, on voit le moteur principal 36 et l'axe 37 d'articulation du moto-réducteur. Bien entendu, le vérin 35 est disposé entre le carter 38 des réducteurs et le support de la charge 2.

## Revendications

1. Dispositif d'asservissement d'une charge (2) entraînée en rotation à l'aide d'un moyen de motorisation (1) relié à la charge par deux réducteurs (3, 4) et comprenant un système de motorisation de précontrainte (5) disposé entre les deux réducteurs (3, 4) de manière à appliquer un couple positif et négatif respectivement à chacun des réducteurs, **caractérisé en ce qu'**il comporte des capteurs pour la mesure des mouvements des réducteurs et **en ce que** le système de motorisation de précontrainte (5) est piloté par un moyen spécifique (6) qui permet de définir les commandes réalisées par ledit système de motorisation de précontrainte (5) pour appliquer des couples variables aux réducteurs (3, 4), de manière à introduire un niveau de précontrainte variable en fonction des anomalies naturelles du système de transmission qui à couple transmis nul dans chacun des réducteurs, correspond à la position relative entre ledit moyen de motorisation (1) et ladite charge (2).

2. Dispositif d'asservissement selon la revendication 1, **caractérisé en ce que** le système de précontrainte (5) est apte à appliquer d'une part un couple en un point quelconque du domaine de fonctionnement des réducteurs et d'autre part d'y introduire un niveau de précontrainte variable.

3. Dispositif d'asservissement selon la revendication 2, **caractérisé en ce que** le système de précontrainte (5) est un vérin (14) commandé par un moteur (17) et coopérant avec une crémaillère ou un système vis-écrou (15).

4. Dispositif d'asservissement selon la revendication 1 ou 2, **caractérisé en ce que** le système de précontrainte (5) comprend une boîte à étages de puissance à trains épicycloïdaux (13).

5. Dispositif d'asservissement selon la revendication 4, **caractérisé en ce qu'**il comprend des entrées de précontrainte sur les couronnes (11) des réducteurs (3, 4) avec motorisation de précontrainte par vérin hydraulique et asservissement de pression.

6. Dispositif d'asservissement selon la revendication 4, **caractérisé en ce que** le système de précontrainte (5) est un ensemble à double chaîne de réduction (21, 22) intégrant un vérin (23) et à au moins un pignon (21) d'entrée dont l'axe de rotation à un degré de liberté par rapport audit ensemble.

7. Dispositif d'asservissement selon la revendication 6, **caractérisé en ce que** le pignon (21) est relié à la sortie dudit ensemble par un système du type joint de Oldham (20).

8. Dispositif d'asservissement selon la revendication 7, **caractérisé en ce qu'**il comprend une bielle (24) articulée pour assurer un déplacement radial du pignon (21).

9. Dispositif d'asservissement selon la revendication 4, **caractérisé en ce que** l'un des réducteurs présente un étage à engrenages (26, 28) à dentures inclinées.

10. Dispositif d'asservissement selon la revendication 9, **caractérisé en ce que** le pignon (28) de l'étage présente un degré de liberté axial par rapport à la roue (26), ledit degré de liberté étant utilisé pour modifier la précontrainte des deux chaînes par un moto-réducteur (29).

11. Dispositif d'asservissement selon la revendication 4, **caractérisé en ce que** le moyen de précontrainte comprend un vérin (35) permettant d'appliquer les réducteurs sur la charge (2).

12. Dispositif d'asservissement selon l'une quelconque des revendications précédentes, **caractérisé en ce que** le système de motorisation de précontrainte comporte un moyen de commande électrique.

## Claims

1. A servo-control unit for a load (2) driven in rotation by motorisation means (1) connected to the load by two reduction gears (3, 4) and comprising a prestressing motoring system (5) arranged between the two reduction gears (3, 4) so as to respectively apply a positive an negative torque to each of the reduction gear, **characterised in that** it comprises sensors to measure the movements of the reduction gears and **in that** the prestressing motoring system (5) is controlled by specific means (6) which allow to define the controls made by the said prestressing motoring system (5) to apply variable torque to the reduction gears (3, 4), in order to introduce a level of variable prestressing depending to the natural anomalies of the transmission system, which with zero torque transmitted in each of the reduction gears, corresponds to the relative position between the said motoring system (1) and the said load (2).

2. A servo-control unit according to Claim 1, wherein the prestressing system (5) is able to firstly apply a torque at any point of the operating field of the reduction gears and secondly introduce into it a variable prestressing level.

3. A servo-control unit according to Claim 2, wherein the prestressing system (5) is a jack (14) driven by a motor (17) and co-operating with a rack or screw-nut system (15).

4. A servo-control unit according to Claim 1 or 2, wherein the prestressing system (5) comprises a power stage box having an epicyclic gear train (13).

5. A servo-control unit according to Claim 4, wherein it comprises prestressing inputs on the crowns (11) of the reduction gear (3, 4) with prestressing motorisation provided by hydraulic jack and pressure servo-control.

6. A servo-control unit according to Claim 4, wherein the prestressing system (5) is a double reduction chain (21, 22) assembly integrating a jack (23) and at least one input pinion (21) whose axis of rotation has a degree of freedom with respect to said assembly.

7. A servo-control unit according to Claim 6, wherein the pinion (21) is connected to the output of said assembly by an Oldham coupling type system (20).

8. A servo-control unit according to Claim 7, wherein it comprises a connecting rod (24) hinged so as to ensure the radial displacement of the pinion (21).

9. A servo-control unit according to Claim 4, wherein one of the reduction gears has a slant toothed gear stage (26, 28).

10. A servo-control unit according to Claim 9, wherein the pinion (28) of the stage has an axial degree of freedom with respect to the wheel (26), said degree of freedom being used to modify the prestressing of the two chains by a back-geared motor (29).

11. A servo-control unit according to Claim 4, wherein the prestressing means comprise a jack (35) allowing the reduction gears to be applied to the load (2).

12. A servo-control unit according to any one of the above Claims, wherein the prestressing motorisation system incorporates electrical control means.

## Patentansprüche

1. Vorrichtung zur Regelung einer Last (2), die mit Hilfe eines Antriebsmittels (1), das mit der Last durch zwei Untersetzungsgetriebe (3, 4) verbunden ist, in Drehung versetzt wird, und die ein Vorspannungs-Antriebssystem (5) umfasst, das zwischen den beiden Untersetzungsgetrieben (3, 4) angeordnet ist, so dass jeweils ein positives und negatives Drehmoment an jedem Untersetzungsgetriebe angelegt wird, **dadurch gekennzeichnet, dass** sie Sensoren zur Messung der Bewegungen der Untersetzungsgetriebe umfasst und dass das Vorspannungs-Antriebssystem (5) durch ein spezifisches Mittel (6) angesteuert wird, das es ermöglicht, die durch das genannte Vorspannungs-Antriebssystem (5) ausgeführten Steuerbefehle zu definieren, um variable Drehmomente in die Untersetzungsgetriebe (3, 4) einzubringen, so dass ein variables Vorspannungs-Niveau in Abhängigkeit der natürlichen Anomalien des Antriebssystems eingeführt wird, das bei einem in jedem der Untersetzungsgetrieben übertragenen Drehmoment von Null der jeweiligen Position zwischen dem genannten Antriebsmittel (1) und der genannten Last (2) entspricht.

2. Regelvorrichtung nach Anspruch 1, **dadurch gekennzeichnet, dass** das Vorspannungssystem (5) geeignet, einerseits ein Drehmoment in einem beliebigen Punkt des Betriebsbereiches der Untersetzungsgetriebe einzubringen, und andererseits dort ein variables Vorspannungsniveau einzuführen ist.

3. Regelvorrichtung nach Anspruch 2, **dadurch gekennzeichnet, dass** das Vorspannungssystem (5) ein Zylinder (14) ist, der durch einen Motor (17) betätigt wird und mit einer Zahnstange oder einem Schraube-Mutter-System (15) zusammenwirkt.

4. Regelvorrichtung nach Anspruch 1 oder 2, **dadurch gekennzeichnet, dass** das Vorspannungssystem (5) ein Leistungsstufen-Getriebe mit Umlaufgetriebezügen (13) umfasst.

5. Regelvorrichtung nach Anspruch 4, **dadurch gekennzeichnet, dass** sie Vorspannungs-Eingänge an den Ringen (11) der Untersetzungsgetriebe (3, 4) mit Vorspannungs-Antrieb durch Hydraulikzylinder und Druckregelung umfasst.

6. Regelvorrichtung nach Anspruch 4, **dadurch gekennzeichnet, dass** das Vorspannungssystem (5) eine Baugruppe mit doppelter Untersetzungskette (21, 22) ist, die einen Zylinder (23) integriert, und mit wenigstens einem Eingangsritzel (21), dessen Drehachse einen Freiheitsgrad in Bezug auf die genannte Baugruppe besitzt.

7. Regelvorrichtung nach Anspruch 6, **dadurch gekennzeichnet, dass** das Ritzel (21) mit dem Ausgang dieser Baugruppe durch ein System vom Typ Oldhamkupplung (20) verbunden ist.

8. Regelvorrichtung nach Anspruch 7, **dadurch gekennzeichnet, dass** sie ein angelenktes Zwischenglied (24) umfasst, um eine radiale Verlagerung des Ritzels (21) zu gewährleisten.

9. Regelvorrichtung nach Anspruch 4, **dadurch gekennzeichnet, dass** eines der Untersetzungsgetriebe eine Übersetzungsstufe (26, 28) mit Schrägverzahnung aufweist.

10. Regelvorrichtung nach Anspruch 9, **dadurch gekennzeichnet, dass** das Stufenritzel (28) einen axialen Freiheitsgrad in Bezug auf das Rad (26) aufweist, wobei der Freiheitsgrad verwendet wird, um die Vorspannung der beiden Ketten durch einen Getriebemotor (29) zu modifizieren.

11. Regelvorrichtung nach Anspruch 4, **dadurch gekennzeichnet, dass** das Vorspannungs-Mittel einen Zylinder (35) umfasst, der es erlaubt, die Untersetzungsgetriebe der Last (2) zuzuordnen.

12. Regelvorrichtung nach irgendeinem der vorhergehenden Ansprüche, **dadurch gekennzeichnet, dass** das Vorspannungs-Antriebssystem ein elektrisches Steuermittel umfasst.
